# EUROPEAN PATENT SPECIFICATION

(11) **EP 2 336 236 B1**
(45) Date of publication and mention of the grant of the patent: **26.10.2016**
(21) Application number: 09814409.0
(22) Date of filing: 04.08.2009
(51) Int. Cl.: C08L 27/06, C08K 9/02

(54) **CHLORINE-CONTAINING RESIN COMPOSITION WITH SUPPRESSED FOAMING FAILURE**
CHLORHALTIGE HARZZUSAMMENSETZUNG MIT UNTERDRÜCKTEM SCHAUMBILDUNGSDEFEKT
COMPOSITION DE RÉSINE CONTENANT DU CHLORE À DÉFAUT DE MOUSSAGE INHIBÉ

(30) Priority: 19.09.2008 JP 2008241161
(43) Date of publication of application: 22.06.2011
(73) Proprietor: Sakai Chemical Industry Co., Ltd., Sakai-shi, Osaka 590-8502 (JP)
(72) Inventor: TSUDA Koichi, Sakai-shi Osaka 590-0985 (JP); OIDEMIZU Makoto, Sakai-shi Osaka 590-0985 (JP)
(74) Representative: Hart-Davis, Jason
(86) International application number: PCT/JP2009/063800
(87) International publication number: WO 2010/032564

(56) References cited:
- EP-A1- 1 690 832
- WO-A1-03/010091
- JP-A- 1 320 219
- JP-A- 4 001 270
- JP-A- 6 001 898
- JP-A- 2003 253 266

## Description

### TECHNICAL FIELD

The present invention relates to a foaming-suppressing chlorine-containing resin composition which contains an alkaline-earth metal hydroxide having, on the surface thereof, a particular coated layer. Particularly, the present invention provides a chlorine-containing resin composition which contains as a foaming-suppressing agent an alkaline-earth metal hydroxide having, on the surface thereof, silica-containing coated layer. Although external defects such as silver streaks, which is caused by foaming, are typically occurred on molding of non-toxic resin compositions for injection molding, the coated layer on the alkaline-earth metal hydroxide of the present invention contributes to remarkably suppress or reduce such external defects.

### BACKGROUND OF THE INVENTION

It has been known that, under a higher temperature condition, chlorine-containing resins may cause decomposition with generation of hydrogen chloride. Molding of chlorine-containing resins is usually made under heating, and therefore, stabilizers are used with chlorine-containing resins to suppress decomposition during heating.

Conventionally, stabilizers containing harmful metals, such as lead compounds, have been widely used as such stabilizers . However, in consideration of recent environmental issues or the like, alternative non-toxic stabilizers, which are free of harmful metals such as lead, are increasingly used.

Typical one of such non-toxic stabilizers is a mixture containing, as main ingredients, polyols, zinc salts of an organic acid, alkaline-earth metal hydroxides, etc. The polyols and the zinc salts of organic acids are used for preventing discoloration of a chlorine-containing resin composition. Alkaline-earth metal hydroxides such as magnesium hydroxide or calcium hydroxide are used as stabilizing agents during dynamic shearing.

Unfortunately, most of non-toxic stabilizers are poorer in heat resistance than conventional lead stabilizers, and, on heating in the molding of the resin compositions, troublesome external defects caused by such poor heat resistance, which are called "flash(es)" or "silver streak(s)", frequently occurs. Thus, conventional non-toxic stabilizers are unsuitable for practical use as stabilizers for such resin compositions, and therefore, non-toxic stabilizers which can suppress external defects have been demanded.

For example, US 2004/147 660 A discloses, as one example of the applications of alkaline-earth metal hydroxide, alkaline-earth metal hydroxide particles having, on the surface thereof, an alkaline-earth metal silicate layer. However, a chlorine-containing resin composition containing such alkaline-earth metal hydroxide particles still causes external defects of the injection-molded articles.

Patent Document 2 discloses magnesium hydroxide coated with silica, which is useful as a flame retardant. No teachings are found, however, in JPH 01 320 219 A about addition of such magnesium hydroxide to a chlorine-containing resin composition. It is not sure from the teachings of JPH 01 320 219 A whether such magnesium hydroxide is suitable or not as a stabilizer for chlorine-containing resin compositions. Particularly, JPH 01 320 219 A teaches high acid resistance of silica-coated magnesium hydroxide, and actually demonstrated in Examples that silica-coated magnesium hydroxide did not generate any gas in a reaction with hydrogen chloride. The teachings of JPH 01 320 219 A suggest unsuitability of silica-coated magnesium hydroxide as a stabilizer for a chlorine-containing resin. The teachings of JPH 01 320 219 A are doubtful on the effect as a stabilizer such as suppression, during molding, of generation of hydrogen chloride and of decomposition of chlorine-containing resin.

### SUMMARY OF THE INVENTION

### -Problems to be solved by the Invention

Generally, dehydrochlorination due to poor heat resistance has been supposed to be a cause of such an external defects as flashes and silver streaks. The present inventors have made an intensive study to identify the cause of flashes and silver streaks, which occur when a non-toxic stabilizer for injection molding is used. As a result, they identified that water is one of causes of flashes and silver streaks. On injection molding of a composition containing chlorine-containing resin and a non-toxic stabilizer, rapid heat release is occurred by the reaction therebetween, and an acidic substance such as hydrogen chloride is generated from the chlorine-containing resin. Then, the acidic substance is reacted with an alkaline-earth metal hydroxide in the non-toxic stabilizer, to generate water, which can be a cause of flashes and silver streaks. The reaction is represented by the following formula (1):

M(OH)₂ + 2HCl → MCl₂ + 2H₂O (1)

M: An alkaline-earth metal (or an alkaline-earth metal ion)

This reaction may be a reason why alkaline-earth metal hydroxide particles of Patent Document 1 having, on the surface thereof, an alkaline-earth metal silicate coating, is not effective to suppress forming of the chlorine-containing resin composition. In other words, an alkaline-earth metal silicate easily reacts with an acidic substance, as it is to be recognized from the fact that magnesium silicates have been used as stomach antacids. As a result, in a resin composition containing such a silicate of an alkaline-earth metal, water generates as mentioned above. For such reasons, it is assumed that coating the surface of alkaline-earth metal hydroxides with silicates of alkaline-earth metals is insufficient to suppress forming of the resin composition.

In contrast, if the alkaline-earth metal hydroxide is removed from a non-toxic stabilizer for injection molding to avoid flash or silver streaks which may be caused by such an alkaline-earth metal hydroxide, some physical properties, particularly heat resistance such as dynamic heat resistance and static heat resistance becomes not sufficient enough to be practically used, although external defects such as flashes decreases. Because insufficient heat resistance of a resin composition may lead to decomposition of the resin, desired properties to tolerate the continuous production could not be attained without any alkaline-earth metal hydroxide.

If alkali metal hydroxides or oxides, or alkaline-earth metal oxides are added in lieu of the alkaline-earth metal hydroxides, degradation of resins would be accelerated because of strong basicity of alkali metal hydroxides and alkali metal oxides. Furthermore, many of such compounds are water-soluble, and thus, they are unsuitable for a stabilizer for a chlorine-containing resin composition. Alkaline-earth metal oxides cause dehydration in a reaction with acidic substances, and therefore, forming, which leads to occurrence of flashes, is not fully suppressed.

Thus, it is very difficult to suppress or decrease flashes or silver streaks on inj ection molding of a chlorine-containing resin composition if the composition contains magnesium hydroxide or calcium hydroxide, or an alkaline-earth metal hydroxide with alkaline-earth metal silicate coating. Under such circumstances, it is difficult to produce a chlorine-containing resin composition which provides an injection-molded product having both sufficient physical properties and suppressed external defects.

As in JPH 01 320 219 A, alkaline-earth metal hydroxides with acid-proof surface (silica-coated surface) themselves have already been known. However, JPH 01 320 219 A merely teaches availability of the alkaline-earth metal hydroxides as flame retardants. Foaming-suppressing effect by alkaline-earth metal hydroxides on molding, particularly on injection molding have never been mentioned in JPH 01 320 219 A. As actually demonstrated in Examples of JPH 01 320 219 A conventional technical knowledge suggests that the alkaline-earth metal hydroxides with acid-proof surface (silica-coated surface) has no reactivity, or a substantially no reactivity to hydrogen halides.

Under these circumstances, the present inventors have found some unknown effects that alkaline-earth metal hydroxide particles with a specific acid-proof surface can suppress foaming (such as silver streaks or flashes) without deteriorating dynamic heat resistance, which is an essential feature for processing of chlorine-containing resins. On the basis of this effect, the present inventors have also found availability of such alkaline-earth metal hydroxide particles as a foaming-suppressing agent for chlorine-containing resins. Thus, the present inventors have completed the present invention.

### - Means for Solving the Problem

For overcoming the above problems, the present inventors have made an intensive study, and as a result, they found that an alkaline-earth metal hydroxide material made through a certain surface-treatment can retard or suppress the reaction of a chlorine-containing resin with an acidic substance which generates via resin degradation and resultant water generation in a chlorine-containing resin composition. The present invention provides a non-toxic chlorine-containing resin composition, specifically a non-toxic chlorine-containing resin composition for injection molding, which suppresses or reduces flashes or silver streaks, whereas maintains certifiable practical physical properties.

That is, the present invention directs to the use of a foaming-suppressing agent, acording to claim 1, and to a foaming-suppressing a chlorine-containing resin composition for injection molding, according to claim 5, comprising:
100 parts by mass of chlorine-containing resin; and
0.01 to 5 parts by mass of an alkaline-earth metal hydroxide having, on the surface thereof, a first coated layer, the first coated layer containing 0.1 to 20% by mass in terms of SiO₂ of silica in 100% by mass of an uncoated alkaline-earth metal hydroxide, as a foaming-suppressing agent.

In an preferred embodiment of the chlorine-containing resin composition, the alkaline-earth metal hydroxide having, on the surface thereof, a first coated layer further comprises a second coated layer formed from at least one surface-treating agent selected from the group consisting of higher fatty acids, higher fatty acid alkali metal salts, polyhydric alcohol higher fatty acid esters, anionic detergents, phosphoric esters, silane coupling agents, aluminum coupling agents, titanate coupling agents, organosilanes, organosiloxanes, and organosilazanes.

According to further preferred embodiment, the chlorine-containing resin composition is a chlorine-containing resin composition for injection molding.

### - Effect Of The Invention

The present invention can provide a non-toxic chlorine-containing resin composition which greatly reduce external defects caused by foaming, such as silver streaks or flashes, on molding process, particularly injection molding.

### MODES FOR CARRYING OUT THE INVENTION

In the present invention, the chlorine-containing resin is not particularly limited, and examples thereof include polyvinyl chloride, polyvinylidene chloride, chlorinated polyethylene, chlorinated polypropylene, post-chlorinated polyvinyl chloride, and chlorinated rubber, as well as vinyl chloride-based copolymers or terpolymers including vinyl chloride-vinyl acetate copolymer, vinyl chloride-ethylene copolymer, vinyl chloride-propylene copolymer, vinyl chloride-styrene copolymer, vinyl chloride-isobutylene copolymer, vinyl chloride-vinylidene chloride copolymer, vinyl chloride-styrene-maleic acid anhydride terpolymer, vinyl chloride-styrene-acrylonitrile terpolymer, vinyl chloride-butadiene copolymer, vinyl chloride-isoprene copolymer, vinyl chloride-chlorinated propylene copolymer, vinyl chloride-vinylidene chloride-vinyl acetate terpolymer, vinyl chloride-acrylate copolymer, vinyl chloride-maleate copolymer, vinyl chloride-methacrylate copolymer, and vinyl chloride-acrylonitrile copolymer. Among them, polyvinyl chloride, polyvinylidene chloride, post-chlorinated polyvinyl chloride, vinyl chloride-based copolymers or terpolymers are preferable, and polyvinyl chloride is particularly preferable.

Examples of the chlorine-containing resin further include mixtures of a chlorine-containing resin with other polymers, copolymers, or terpolymers. Such polymers copolymers, or terpolymers to be mixed with the chlorine-containing resin include polymers of α-olefins such as polyethylene, polypropylene, polybutene, and poly-3-methylbutene; copolymers of α-olefins such as ethylene-vinyl acetate copolymer, and ethylene-propylene copolymer; copolymers or terpolymers of polystyrene, acrylic resin, or styrene with other comonomers, including maleic acid anhydride, butadiene, and acrylonitrile; acrylonitrile-butadiene-styrene terpolymer, methacrylate-butadiene-styrene terpolymer, and the like. If needed, reinforcing resins or processing aids (polymethyl methacrylate resin, chlorinated poly ethylene, etc.) may also be added to the chlorine-containing resin.

The method for producing the chlorine-containing resin is not particularly limited, and a known method including the step of, for example, suspension polymerization, bulk polymerization, emulsion polymerization, and the like may be employed.

Although not particularly limited, the chlorine-containing resin is preferably a chlorine-containing resin suitable for injection molding because the external defect-suppressing effect of the composition of the present invention is most remarkably exerted on injection molding.

The chlorine-containing resin composition of the present invention contains an alkaline-earth metal hydroxide which has, on the surface thereof, a first coated layer.

As flame retardants, availability of alkaline-earth metal hydroxides has been proposed up to now (See JP 2003/253 266 A. It has been considered that such alkaline-earth metal hydroxides with acid-proof surface (silica-coated surface) has no reactivity, or a substantially no reactivity to hydrogen halides (See JPH 01 320 219 A). In JP 2003/253 266 A a magnesium hydroxide particle obtained through a specific surface-treatment was used as a flame retardant for a flame-retardant resin to improve acid resistance of a flame-retardant resin composition. No teachings for foaming-suppressing effect on molding process, particularly on injection molding was found in JP 2003/253 266 A.

On the contrary, the present inventors have found some unknown effects that alkaline-earth metal hydroxide particles with a specific acid-proof surface can suppress foaming (such as silver streaks or flashes) without deteriorating dynamic heat resistance, which is an essential feature required to process chlorine-containing resins. On the basis of this effect, the present inventors have also found availability of such alkaline-earth metal hydroxide particles as a foaming-suppressing agent for chlorine-containing resins. Thus, the present inventors have completed the present invention.

When magnesium hydroxide is used as a flame retardant for a resin, generally 10 to 500 parts by mass of a flame retardant may be used relative to 100 parts by mass of a resin (For example, see Claims in JP 2001/312 925 A. Actually, 150 parts by mass of a flame retardant was used relative to 100 parts by mass of a resin in a working example of JP 2001/312 925 A. On the contrary, the composition of the present invention includes 0.01 to 5 parts by mass (preferably 0.1 to 5 parts by mass, more preferably 0.1 to 3 parts by mass, particularly preferably 0.1 to 1 parts by mass) of the alkaline-earth metal hydroxide having the first coated layer on the surface, relative to 100 parts by mass of chlorine-containing resin. Thus, for flame retardant purpose, a large amount of an alkaline-earth metal hydroxide is generally required, whereas the composition of the present invention requires only small amount of the alkaline-earth metal hydroxide relative to the amount of a resin to exert a sufficient forming-suppression effect. Thus, the alkaline-earth metal hydroxide, which serves as a foaming-suppressing agent in the present invention, is distinctive from that for flame retardant purposes, such as magnesium hydroxide as mentioned above, in their way of use.

Herein, a raw alkaline-earth metal hydroxide that is not coated with the first coated layer is also referred to as "uncoated alkaline-earth metal hydroxide" in order to distinguish from the alkaline-earth metal hydroxide having the first coated layer.

Herein, the term "coat" or "coating" means to coat at least part of or whole of the surface of an alkaline-earth metal hydroxide. Herein, the term "coated layer" means a layer coating at least part of or whole of the surface of an alkaline-earth metal hydroxide.

Examples of the uncoated alkaline-earth metal hydroxide include hydroxides of calcium, magnesium, barium, and strontium. Among them, a hydroxide of calcium or magnesium is preferable, and magnesium hydroxide is particularly preferable. The uncoated alkaline-earth metal hydroxide is not particularly limited, and may be any one of natural products or synthetic products. Examples of such natural products and the synthetic products include ground powder from natural ore, powder obtained by neutralizing an aqueous alkaline-earth metal salt solution with an alkali compound, powder of modified alkaline-earth metal hydroxide particles modified with an appropriate modifying agent such as borates, phosphates, water-soluble zinc salts. The alkaline-earth metal hydroxide particles may be a solid solution containing hetero metal elements such as zinc, cobalt, copper, nickel, or iron.

Methods for synthesizing the uncoated alkaline-earth metal hydroxide are not particularly limited. For example, the uncoated alkaline-earth metal hydroxide may be produced by a method including the step of neutralization reaction under normal temperature and pressure. Preferably, alkaline-earth metal hydroxide is suitably produced through a hydrothermal reaction of an alkaline-earth metal salt and a hydroxide under a high temperature and high pressure condition. Specifically, a desired alkaline-earth metal hydroxide can be produced by the reaction between an alkaline-earth metal chloride and a basic substance under heating.

The alkaline-earth metal hydroxides may be used singly, or in combination.

The first coated layer is a layer containing 0.1 to 20 % by mass of silica relative to 100% by mass of the uncoated alkaline-earth metal hydroxide. In the present invention, "silica" means a hydrous or anhydrous silicon oxide represented by the formula: SiO₂·nH₂O (0≤n≤2). Thus, the amount, "... % by mass in terms of SiO₂ of silica in 100% by mass of an uncoated alkaline-earth metal hydroxide", means a percentage calculated by the equation: [(Total mass of silica compound)-(The mass corresponding to the mass of water molecules in the silica compound)] / (Total mass of uncoated alkaline-earth metal hydroxide). The amount of silica in the first coated layer is preferably 0.5 to 15 % by mass, and more preferably 1 to 10 % by mass in terms of SiO₂ relative to the uncoated alkaline-earth metal hydroxide. When the amount is lower than 0.1% by mass, the effect of suppressing water generation in the reaction with acidic substances may be insufficient. Thus, such a low amount is not preferred. On the contrary, when the amount is larger than 20% by mass, physical properties such as dynamic heat resistance may be remarkably deteriorated, although the reaction of the alkaline-earth metal hydroxide with acidic substances may be almost suppressed. Thus such a large amount is not preferred, either.

The chlorine-containing resin composition of the present invention contains 0.01 to 5 parts by mass of an alkaline-earth metal hydroxide having, on the surface thereof, a first coated layer relative to 100 parts by mass of the chlorine-containing resin. When the amount of the alkaline-earth metal hydroxide is lower than 0.01 parts by mass relative to 100 parts by mass of the chlorine-containing resin, the effect of enhancing heat resistance may not substantially be observed. On the contrary, when the amount exceeds 5 parts by mass, discoloration may be easily occurred even though the composition can tolerate a practical use. In addition, total cost can increase. The amount is preferably 0.1 to 5 parts by mass, more preferably 0.1 to 3 parts by mass, and particularly preferably 0.1 to 1 parts by mass relative to 100 parts by mass of the chlorine-containing resin.

Methods for forming the first coated layer on the surface of the alkaline-earth metal hydroxide are not particularly limited, and the coated layer may be formed by, for example, dry coating (mechanochemical reaction), wet precipitation method, sol mix drying, or the like method.

As one example of such methods, the following one may be mentioned. First, under a temperature of 5 to 100°C, preferably, 50 to 95°C, a water-soluble silicate is neutralized by an acid in the presence of alkaline-earth metal hydroxide particle, preferably magnesium hydroxide particle, to precipitate silica on the surface of alkaline-earth metal hydroxide particle. Thereby, a silica-containing coated layer is formed on the surface of alkaline-earth metal hydroxide particle.

While the method is not particularly limited, more specific steps are as follows. First, aqueous slurry of an alkaline-earth metal particle hydroxide is heated and kept at a temperature of higher than 60°C, more preferably, 60°C to 95°C. With keeping the temperature of the slurry, 0.1 to 20% by mass (in terms of SiO₂, based on the mass of uncoated alkaline-earth metal hydroxide particle) of a water-soluble silicate (for example, sodium silicate) is added to the slurry. To the resultant mixture, an acid (for example, sulfuric acid or hydrochloric acid) is added over 40 minutes or longer, to neutralize the slurry to be a pH of 6 to 10, preferably 6 to 9.5. Thereby, a silica-containing coated layer is formed on the surface of alkaline-earth metal hydroxide particle.

In the above method, a period to be required for adding the above acid is not particularly limited. The period is preferably about 3 hours in view of production efficiency.

While the method is not limited, another method as explained in the followings may be mentioned. First, aqueous slurry of alkaline-earth metal hydroxide particle is heated and kept at a temperature of higher than 60°C, more preferably 60 to 95°C. With keeping the temperature of the slurry, 0.1 to 20% by mass (in terms of SiO₂, based on the mass of uncoated alkaline-earth metal hydroxide particle) of a water-soluble silicate (for example, sodium silicate) and an acid (for example, sulfuric acid or hydrochloric acid) in an amount of a substantially equivalent ratio to the silicate are simultaneously added to the slurry over 40 minutes or longer. Thereafter, if needed, the acid is further added to the resultant mixture, to neutralize the mixture to be a pH of 6 to 10, preferably, 6 to 9.5. Also by this method, a silica-containing coated layer can be formed on the surface of alkaline-earth metal hydroxide particle.

In the above method, the water-soluble silicate may be used preferably in an amount of 1 to 20% by mass, more preferably in an amount of 3 to 20% by mass.

In the above methods, aqueous slurry means a suspension that contains water, or a mixture of water and a water-soluble organic solvent as a suspending medium. An aqueous solution means a solution that contains water, or a mixture of water and a water-soluble organic solvent as a solvent.

The aqueous slurry of an alkaline-earth metal hydroxide particle means an aqueous slurry obtainable by neutralizing an aqueous solution of a water-soluble alkaline-earth metal salt (for example, magnesium chloride or magnesium nitrate) with an alkali compound such as sodium hydroxide or ammonia to precipitate an alkaline-earth metal hydroxide, or an aqueous slurry obtainable by dispersing an alkaline-earth metal hydroxide particle in an aqueous medium.

As mentioned above, by adding a water-soluble silicate to aqueous slurry of an alkaline-earth metal hydroxide, and then neutralizing the silicate with an acid (for example, sulfuric acid), or by simultaneously adding both a water-soluble silicate and an acid to the slurry to neutralize the silicate, silica is precipitated on the surface of the alkaline-earth metal hydroxide particle. Thus, silica-containing coated layer can be formed on the surface of the alkaline-earth metal hydroxide particle. However, by such a method, the obtained slurry of the alkaline-earth metal hydroxide particle having a silica-containing coated layer sometimes shows poor filterabilitv.

To enhance the filterability, the alkaline-earth metal hydroxide having the first coated layer on the surface is preferably surface-treated further with at least one (second) surface-treating agent selected from the group consisting of higher fatty acids, higher fatty acid alkali metal salts, polyhydric alcohol higher fatty acid esters, anionic detergents, phosphoric esters, silane coupling agents, aluminum coupling agents, titanate coupling agents, organosilanes, organosiloxanes, and organosilazanes, to form a second coated layer on the surface of the alkaline-earth metal hydroxide.

In this embodiment, for explanation, the coated layer containing 0.1 to 20% by mass (in terms of SiO₂, based on the mass of uncoated alkaline-earth metal hydroxide) of a water-soluble silicate is referred to as "a first coated layer", whereas a layer formed by surface treatment with the above surface-treating agent is referred to as "a second coated layer". As defined above, the term "coat" or "coating" means to coat at least part or of whole of the surface of an alkaline-earth metal hydroxide. Also, the term "coated layer" means a layer coating at least part of or whole of the surface of an alkaline-earth metal hydroxide. These definitions can be applied to both the first and the second coated layers.

Thus, one preferable aspect of the present invention constitutes a chlorine-containing resin composition which contains an alkaline-earth metal hydroxide with both the first coated layer and the second coated layer.

The structures of the first coated layer and the second coated layer are not particularly limited. For example, a multilayer including the first coated layer as an inner layer and the second coated layer as an outer layer may be applicable. Conversely, a multilayer including the second coated layer as an inner layer and the first coated layer as an outer layer may also be applicable. When the first coated layer is formed on only part of the surface of the alkaline-earth metal hydroxide, the second coated layer may be formed on the rest of the surface (the area not coated with the first coated layer) in the same sphere. It is not necessary to have a clear boundary between the first coated layer and the second coated layer, and the two layers may partially constitute a composite structure. Any structure may be applied as long as the effect of the present invention is not impaired. For enhancing the filterability of the slurry, preferable is either one of a multilayer structure including the first coated layer as an inner layer and the second coated layer as an outer layer, or a structure in which the first coated layer is formed on part of the surface of the alkaline-earth metal hydroxide, and the second coated layer is formed on the rest of the surface in the same sphere.

Examples of the higher fatty acid include C₁₂₋₂₄ saturated or unsaturated higher fatty acids. Specific examples of the higher fatty acid include, but are not limited to, C₁₂₋₂₄ saturated fatty acid such as lauric acid, myristic acid, pentadecyl acid, palmitic acid, margaric acid, stearic acid, tuberculostearic acid, arachidic acid, behenic acid, and lignoceric acid; and C₁₂₋₂₄ unsaturated higher fatty acids such as oleic acid, linolic acid, linolenic acid, and arachidonic acid. Examples of alkali metal salt of the higher fatty acid include salts of these fatty acid, and sodium salts or potassium salts are preferable.

Specific examples of the polyhydric alcohol fatty acid ester include, but are not limited to, glycerol monostearate, and glycerol monooleate.

Examples of the anionic detergent include, but are not limited to, sulfates of higher alcohols such as stearyl alcohol, and oleyl alcohol; sulfates of polyethylene glycol ether; amido-bonded sulfates; ester-bonded sulfates, ester-bonded sulfonates, amide-bonded sulfonates, ether-bonded sulfonates, ether-bonded alkylallylsulfonates, ester-bonded alkylallylsulfonates, and amide-bonded alkylallylsulfonates.

Examples of the phosphoric ester include, but are not limited to, phosphoric acid triester, phosphoric acid diester, phosphoric acid monoester, or a mixture thereof.

Examples of the phosphoric acid triester include, but are not limited to, trimethyl phosphate, triethyl phosphate, tripropyl phosphate, tributyl phosphate, tripentyl phosphate, trihexyl phosphate, trioctyl phosphate, triphenyl phosphate, tricresyl phosphate, trixylenyl phosphate, hydroxyphenyldiphenyl phosphate, cresyldiphenyl phosphate, xylenyldiphenyl phosphate, oleyl phosphate, and stearyl phosphate.

Examples of diesters or monoesters (namely, acidic phosphoric esters) include, but are not limited to, methyl acid phosphate (a mixture of a mono methyl ester and a dimethyl ester), ethyl acid phosphate (a mixture of a monoethyl ester and a diethyl ester), isopropyl acid phosphate (a mixture of a monoisopropyl ester and a diisopropyl ester), butyl acid phosphate (a mixture of a monobutyl ester and a dibutyl ester), 2-ethylhexyl acid phosphate (a mixture of a mono-2-ethylhexyl ester and a di-2-ethylhexyl easter), isodecyl acid phosphate (a mixture of a monoisodecyl ester and a diisodecyl ester), dilauryl acid phosphate, lauryl acid phosphate (a mixture of a monolauryl ester and a dilauryl ester), tridecyl acid phosphate (a mixture of a monotridecyl acid phosphate and a ditridecylacid phosphate), monostearyl acid phosphate, distearyl acid phosphate, stearyl acid phosphate (a mixture of a monostearyl ester and a distearyl ester), isostearyl acid phosphate (a mixture of a monoisostearyl ester and a diisostearyl ester), oleyl acid phosphate (a mixture of a monooleyl ester and a dioleyl ester), and behenyl acid phosphate (a mixture of monobehenyl ester and a dibehenyl ester).

These acidic phosphoric esters may be at least one metal salt, such as salts of metals belonging to Ia, IIa, IIb, and IIIa groups in the periodic table. Preferable examples include lithium salts, magnesium salts, calcium salts, strontium salts, barium salts, zinc salts, aluminum salts of the above diesters or monoesters.

The silane coupling agent used herein means an organosilane having a reactive functional group selected from amino, epoxy, vinyl, acryloyl, methacryloyl, or mercapto group, or chlorine atom, together with a hydrolyzable group represented by an alkoxy group.

Thus, examples of the silane coupling agent include, but are not limited to, vinylethoxysilane, vinyl-tris(2-methoxy ethoxy)silane, [(γ-methacryloxy)propyl]trimethoxysilane, methyltriethoxysilane, hexyltrimethoxysilane, γ-aminopropyltrimethoxysilane, β-(3,4-epoxycyclohexyl)ethyltrimethoxysilane, γ-glycidoxypropyltrimethoxysilane, γ-mercaptopropyltrimethoxysilane, and 3-chloropropyltrimethoxysilane.

Examples of the aluminum coupling agent include, but are not limited to, acetylalkoxy aluminum diisopropylate.

Examples of the titanate coupling agent include, but are not limited to, isopropyl triisostearoyl titanate, isopropyl tris(dioctylpyrophosphate)titanate, isopropyl tri(N-aminoethylaminoethyl)titanate, and isopropyl tridecylbenzenesulfonyl titanate.

The organosilane is represented by an organic silicon compound having, together with alkyl and/or aryl, a hydrolyzable group such as alkoxy group. Specific examples include phenyltrimethoxysilane, diphenyldimethoxysilane, dimethyldimethoxysilane, tetraethoxysilane, trimethylchlorosilane, hexyltriethoxysilane, and decyltrimethoxysilane.

Examples of the organosiloxane include organosiloxane oligomer, and organopolysiloxane, including organodisiloxane. Examples of the organodisiloxane include, but are not limited to, hexamethyldisiloxane, hexaethyldisiloxane, hexapropyldisiloxane, hexaphenyldisiloxane, and sodium methyl siliconate. Examples of the organosiloxane oligomer include, but are not limited to, methyl phenyl siloxane oligomer, and phenyl siloxane oligomer.

According to the present invention, organopolysiloxane is particularly preferred as the organosiloxane. Among them, so-called "silicone oils" are suitably used. Examples of such organopolysiloxanes include so-called "straight silicone oil", such as dimethyl polysiloxane, methyl hydrogen polysiloxane, methyl phenyl polysiloxane, and methyl polycyclosiloxane.

Also, so-called "modified silicone oil" having several organic functional groups may suitably used. Examples of such modified silicone oil include, but are not limited to, polyether modified-, epoxy modified-, amino modified-, carboxyl modified-, mercapto modified-, carbinol modified-, methacryl modified- and long chain alkyl modified-silicone oils.

Examples of the organosilazane include, but are not limited to, hexamethyldisilazane, hexaethyldisilazane, hexaphenyldisilazane, hexaethylcyclotrisilazane, methylpolysilazane, and phenylpolysilazane.

According to the present invention, silane coupling agents are particularly preferred as the surface-treating agent. Among silane coupling agents, γ-methacryloxypropyltrimethoxysilane, methyltriethoxy silane, and hexyltrimethoxysilane are particularly preferred.

The second surface-treating agent is used in the surface treatment in an amount within the range of 0.03 to 10% by mass, preferably 0.1 to 5% by mass, particularly preferably 1 to 3% by mass of the uncoated alkaline-earth metal hydroxide.

The method of the surface treatment with a surface-treating agent for forming the second coated layer is not particularly limited, and any of wet methods and dry methods may be employed.

As one example as a wet method of the surface treatment of the alkaline-earth metal hydroxide particle, the following one is mentioned, although the method is not limited to this example. First, as mentioned above, a first coated layer containing silica is formed on the surface of uncoated alkaline-earth metal hydroxide particles in slurry of the uncoated alkaline-earth metal hydroxide. Then, to slurry of alkaline-earth metal hydroxide having the first coated layer, a surface-treating agent in a suitable form, such as emulsion, aqueous solution, or aqueous suspension, is added, and then the slurry is heated to 20°C to 95°C, preferably 30°C to 95°C. Under heating, the resultant mixture is stirred and mixed with in the range of pH of 6 to 12. Thereafter, alkaline-earth metal hydroxide particles are filtrated, and obtained particles are washed with water, then dried and ground.

As one example as a dry method of the surface treatment of the alkaline-earth metal hydroxide particle, the following one is mentioned, although the method is not limited to this example. First, as mentioned above, a first coated layer containing silica is formed on the surface of uncoated alkaline-earth metal hydroxide particles in slurry of the uncoated alkaline-earth metal hydroxide. The slurry is filtrated to separate coated alkaline-earth metal hydroxide particles. Thus-obtained coated alkaline-earth metal hydroxide particles are washed with water, and then dried and ground. Then, under heating at 5°C to 300°C, preferably 30°C to 300°C, the ground particles are stirred and mixed with the surface-treating agent.

The total mass of the second coated layer provided on the surface of the alkaline-earth metal hydroxide is not particularly limited, and is preferably 0.03 to 10% by mass of the uncoated alkaline-earth metal hydroxide. The total mass is more preferably 0.1 to 5% by mass, still more preferably 1 to 3% by mass relative to the mass of the uncoated alkaline-earth metal hydroxide.

The chlorine-containing resin composition according to the present invention may optionally contain other suitable additives. Examples of such additives include plasticizers, lubricants, fillers, antioxidants, thermal stabilizers, nucleating agents, crosslinking agents, crosslinking aids, antistatic agents, compatibilizing agents, photoresistant agents, pigments, foaming agent, and mildewproofing agents.

The method for preparing a chlorine-containing resin composition of the present invention is not particularly limited. The chlorine-containing resin composition may be produced by kneading the ingredients with, for example, a single screw extruder, a twin screw extruder, a roll-type kneader, a kneader, and a Banbury mixer.

The chlorine-containing resin composition of the present invention may be suitably used, according to the purpose of use, in various moldings such as injection molding, extrusion molding, blow molding, press molding, vacuum molding, calender molding, transfer molding, laminate molding. Specifically, the effects of the present invention to suppress external defects such as flashes or silver streaks may become greatest in injection molding. Thus, the chlorine-containing resin composition is preferably a chlorine-containing resin composition for injection molding. Also, the chlorine-containing resin composition for injection molding is preferably used in injection molding.

Such use of the chlorine-containing resin composition for injection molding is one aspect of the present invention. Also, one aspect of the present invention relates to a method, which includes mixing the alkaline-earth metal hydroxide having, on the surface thereof, the first coated layer with a chlorine-containing resin, and molding the obtained chlorine-containing resin composition by injection molding. Also, injection-molded body producible from the method constitutes another aspect of the present invention. In the method, ingredients and amounts of the ingredients to be added in the chlorine-containing resin composition are already mentioned above.

In a preferred embodiment of the use, or the method of producing the injection-molded body, the alkaline-earth metal hydroxide having, on the surface thereof, the first coated layer further includes a second coated layer formed from at least one surface treating agent selected from the group consisting of higher fatty acids, higher fatty acid alkali metal salts, polyhydric alcohol higher fatty acid esters, anionic detergents, phosphoric esters, silane coupling agents, aluminum coupling agents, titanate coupling agents, organosilanes, organosiloxanes, and organosilazanes.

### EXAMPLES

The present invention is explained below referring to the following Examples, although the present invention is not limited to these Examples.

### <Preparation of alkaline-earth metal hydroxide with a coated layer> (Synthesis Example A)

To 5 L of water in a reaction vessel, 16.7 L of a 4-mol/L aqueous magnesium chloride solution and 8.4 L of a 14.3-mol/L aqueous sodium hydroxide solution were simultaneously added under stirring. Then, the reaction mixture was subjected to hydrothermal reaction at 170°C for 1 hour. Thus-obtained magnesium hydroxide was filtrated, and then washed with water. The obtained cake was suspended in water again, to give aqueous slurry of magnesium hydroxide (150 g/L). 20 L of the aqueous slurry of magnesium hydroxide (150 g/L) was heated to 80°C, and then 150 g (in terms of SiO₂) of sodium silicate was added thereto. Thereafter, sulfuric acid was added to the slurry over 1 hour until the pH of the slurry reached 9. The slurry was matured at 80°C for 1 hour, to form a high-density silica-containing coated layer on the surface of the magnesium hydroxide particles. Coated magnesium hydroxide particles were separated from obtained slurry by filtration, followed by washing with water, drying, and grinding. Thereby, an alkaline-earth metal hydroxide, which is one of the ingredients of a chlorine-containing resin composition of the present invention, was produced.

### (Synthesis Example B)

20 L of the aqueous slurry of magnesium hydroxide before silica coating (150 g/L), which had been prepared in Synthesis Example A, was heated to 80°C, and then 300 g (in terms of SiO₂) of sodium silicate was added thereto. Thereafter, sulfuric acid was added to the slurry over 1 hour until the pH of the slurry reached 9. The slurry was matured at 80°C for 1 hour, to form a high-density silica-containing coated layer on the surface of the magnesium hydroxide particles. Separately, an aqueous solution containing 0.3% acetic acid and 50% methanol was prepared, and then 90 g of γ-methacryloxypropyltrimethoxysilane was added to the solution to cause hydrolysis. Thereby, an emulsion containing hydrolyzed γ-methacryloxypropyltrimethoxysilane was produced. The emulsion was added to the slurry, and then mixed at 80°C for 1 hour. Then, the slurry was filtrated to separate coated magnesium hydroxide particles. The obtained coated magnesium hydroxide particles were washed with water, and then dried and ground, to prepare an alkaline-earth metal hydroxide, which is one of the ingredients of a chlorine-containing resin composition of the present invention.

### (Synthesis Example C)

20 L of the aqueous slurry of calcium hydroxide before silica coating (150 g/L) was heated to 80°C under stirring, and then 30 g (in terms of SiO₂) of sodium silicate was added thereto. Thereafter, sulfuric acid was added to the slurry over 1 hour until the pH of the slurry reached 9. The slurry was matured at 80°C for 1 hour, to form a high-density silica-containing coated layer on the surface of the calcium hydroxide particles. Separately, an aqueous solution containing 0.3% acetic acid and 50% methanol was prepared, and then 90 g of hexyltrimethoxysilane was added to the solution to cause hydrolysis. Thereby, an emulsion containing hydrolyzed hexyltrimethoxysilane was produced. The emulsion was added to the slurry, and then mixed at 80°C for 1 hour. Then, the slurry was filtrated to separate coated calcium hydroxide particles. The obtained coated calcium hydroxide particles were washed with water, and then dried and ground, to give an alkaline-earth metal hydroxide, which is one of the ingredients of a chlorine-containing resin composition of the present invention.

### (Preparation Example)

### <Preparation of chlorine resin-containing compositions and sheets>

According to the recipe for each Examples and comparative Example listed in Table 1 or 2, ingredients were kneaded with an 8-inch roll at 170°C for 5 minutes, to prepare a chlorine resin-containing composition. Chlorine resin-containing compositions were each molded in a sheet form, to prepare a 0.3-mm thick sheet.

### <Evaluation of sheets>

### (Foaming by Press)

The sheet prepared in the Preparation Examples was pressed with an electric press at 220°C by one-minute preheating and two-minutes pressing (compression pressure: 4.9 MPa (50 kgf/cm²)). The presence or absence of bubbles on the surface of pressed sheet was observed by the eye. If bubbles were observed on the sheet, the sample was indicated as "Observed" in the Tables, and if not, the sample was indicated as "Not observed".

### (Dynamic heat resistance)

The sheet prepared in the Preparation Example was cut in pieces. Then, 65 g of the pieces of the sheet were placed in a labo plastomill type 50C-150 (R-60) (a product of Toyo Seiki Seisaku-sho, LTD), and kneaded at 200°C with a rotation speed at 30 rpm. During the kneading, the period from start of kneading to the torque elevation was measured.

### (Static oven heat resistance)

Prepared sheet was cut in pieces of 3 cm x 4 cm, and aged in a gear oven at 200°C. Discoloration after the aging was evaluated by the eye.
++: Excellent (No discoloration was observed)
+: Good (Almost no discoloration was observed)
+-: Acceptable (Slightly discolored)
--: Defective (Remarkably discolored)

### (Static press heat resistance)

The sheet prepared was pressed with an electric press at 200°C by one-minute preheating and two-minutes pressing (compression pressure: 4.9 MPa (50 kgf/cm²)). Discoloration after the pressing was evaluated by the eye.
++: Excellent (No discoloration was observed)
+: Good (Almost no discoloration was observed)
+-: Acceptable (Slightly discolored)
--: Defective (Remarkably discolored)

### <Evaluation of injection molded body>

### (Evaluation of frequency of occurrence of flashes on injection molding)

The components listed in Tables 1 and 2 were stirred with a 20-L high speed mixer, and the mixture was heated to 120°C. Then, the mixture was rapidly cooled to 40°C, to produce a compound for injection molding test. The obtained compound was molded by inj ection molding with a 40T injection molding machine (a product of Nissei Plastic Industrial Co., Ltd., barren: 60°C, nuzzle: 190°C). The occurrence of foaming (flashes) on the obtained molded article was observed by the eye. If foaming was observed on the sheet, the sample was indicated as "Observed" in the Tables, and if not, the sample was indicated as "Not observed)".

### (Explanation of components)

In Examples and comparative Examples, the following alkaline-earth metal hydroxides were used:

### (Examples)

Sample A: Magnesium hydroxide particle described in Synthesis Example A
Sample B: Magnesium hydroxide particle described in Synthesis Example B
Sample C: Calcium hydroxide particle described in Synthesis Example C

### (Comparative Example)

Comparative magnesium hydroxide: Magnesium hydroxide #200, a product of Konoshima Chemical Co., Ltd.
Comparative calcium hydroxide: Slaked lime special grade, a product of Hinomaru Kogyo
Comparative component A: Magnesium hydroxide coated with alkaline-earth metal silicate produced in the same manner as Example 1 of US 2004/147 660 A.

The evaluation result of a conventional lead-based stabilizer is illustrated in Table 2 as Referential Example 1. Tribasic lead sulfate: L-7000, a product of Sakai Chemical Industry Co., Ltd
Dibasic lead sulfite: NB-2000, a product of Sakai Chemical Industry Co., Ltd
Lead stearate: SL-1000, a product of Sakai Chemical Industry Co., Ltd

**[Table 1]**

| | Examples | | | | | | |
|---|---|---|---|---|---|---|---|
| | 1 | 2 | 3 | 4 | 5 | 6 | 7 |
| Vinyl chloride resin | 100 | 100 | 100 | 100 | 100 | 100 | 100 |
| Zinc stearate | 0.8 | 0.8 | 0.8 | 0.8 | 0.8 | 0.8 | 0.8 |
| Dibenzoyl methane | 0.1 | 0.1 | 0.1 | 0.1 | 0.1 | 0.1 | 0.1 |
| Dipentaerythritol | 2 | 2 | 2 | 2 | 2 | 2 | 2 |
| Sample A | 0.03 | 0.5 | | | 4 | | |
| Sample B | | | 0.5 | | | 4 | |
| Sample C | | | | 0.5 | | | 4 |
| Foaming by press | Not observed | Not observed | Not observed | Not observed | Not observed | Not observed | Not observed |
| Dynamic heat resistance | 20 min | 30 min | 30 min | 30 min | 40 min | 40 min | 40 min |
| Static oven heat resistance | +- | + | + | + | ++ | ++ | ++ |
| Static press heat resistance | +- | ++ | ++ | ++ | +- | +- | +- |
| Occurrence of flashes on injection molding | Not observed | Not observed | Not observed | Not observed | Not observed | Not observed | Not observed |

**[Table 2]**

| | Comparative Example | | | | | | | | Referential Example |
|---|---|---|---|---|---|---|---|---|---|
| | 1 | 2 | 3 | 4 | 5 | 6 | 7 | 8 | 1 |
| Vinyl chloride resin | 100 | 100 | 100 | 100 | 100 | 100 | 100 | 100 | 100 |
| Zinc stearate | 0.8 | 0.8 | 0.8 | 0.8 | 0.8 | 0.8 | 0.8 | 0.8 | |
| Dibenzoyl methane | 0.1 | 0.1 | 0.1 | 0.1 | 0.1 | 0.1 | 0.1 | 0.1 | |
| Dipentaerythritol | 2 | 2 | 2 | 2 | 2 | 2 | 2 | 2 | |
| Comparative magnesium hydroxide | 0.5 | - | - | 4 | - | 0.03 | - | - | |
| Comparative calcium hydroxide | - | 0.5 | - | - | 4 | - | 0.03 | - | |
| Tribasic lead sulfate | | | | | | | | | 1.5 |
| Dibasic lead sulfite | | | | | | | | | 1.5 |
| Lead stearate | | | | | | | | | 0.5 |
| Comparative component A | | | | | | | | 0.5 | |
| Foaming by press | Observed | Observed | Not observed | Observed | Observed | Observed | Observed | Observed | Not observed |
| Dynamic heat resistance | 30min | 35 min | 10 min | 50 min | 50 min | 15 min | 15 min | 25 min | 35 min |
| Static oven heat resistance | + | + | - | - | - | - | - | +- | + |
| Static press heat resistance | +- | +- | + | - | - | +- | +- | + | + |
| Occurrence of flashes on injection molding | Observed | Observed | "Burned" | Observed | Observed | Observed | Observed | Observed | Not observed |

As illustrated in Table 1, any of the chlorine-containing resin compositions of Examples, which fall within the scope of the present invention, showed no foaming (flashes) on injection molding at all. The results of the Examples were comparable to the case where a lead-based stabilizer, whose alternatives has been demanded in view of hazardousness, was used (Referential Example 1).

On the contrary, comparative Example 1 to 2 and 4 to 7, in which uncoated magnesium hydroxide or calcium hydroxide was blended, or comparative Example 8, in which magnesium hydroxide coated with an alkaline-earth metal silicate, caused external defects by foaming (flashes) on injection molding. In comparative Example 3, which contains no alkaline-earth metal hydroxide, a blackening phenomenon generally called "burning" was occurred, and the molded article was not tolerable for practical use. Thus, the result of Examples and comparative Examples demonstrated the advantageous effect of the present invention to suppress foaming (flashes) on injection molding.

Regarding other physical properties, physical properties of chlorine-containing resin compositions in Examples were comparable to a conventional composition containing a lead-based stabilizer (Referential Example 1). On the contrary, the composition in comparative Examples only showed poor physical properties in any of or all of foaming resistance, heat resistance, or the like. Such poor physical properties were insufficient for practical use. These results showed that the chlorine-containing resin composition of the present invention could be used as an alternate of a conventional chlorine-containing resin composition that contains hazardous lead-based stabilizers.

## Claims

1. Use of a foaming-suppressing agent for a chlorine-containing resin composition comprising an alkaline-earth metal hydroxide having, on the surface thereof, a first coated layer which contains 0.1 to 20% by mass in terms of SiO₂ of silica in 100% by mass of an uncoated alkaline-earth metal hydroxide as a foaming-suppressing agent in a chlorine-containing resin composition, wherein the chlorine-containing resin composition comprises:
100 parts by mass of chlorine-containing resin; and
0.01 to 5 parts by mass of the foaming-suppressing agent.

2. The use of the foaming-suppressing agent according to claim 1, wherein the alkaline-earth metal is magnesium hydroxide.

3. The use of the foaming-suppressing agent according to claim 1 or 2,
wherein the alkaline-earth metal hydroxide having a first coated layer on the surface thereof further comprises a second coated layer formed from at least one surface-treating agent selected from the group consisting of higher fatty acids, higher fatty acid alkali metal salts, polyhydric alcohol higher fatty acid esters, anionic detergents, phosphoric esters, silane coupling agents, aluminum coupling agents, titanate coupling agents, organosilanes, organosiloxanes, and organosilazanes.

4. The use according to claim 1, 2 or 3, wherein the chlorine-containing resin composition comprises 0.1 - 3 parts by mass of the foaming-suppressing agent.

5. Foaming-suppressing chlorine-containing resin composition for injection molding, comprising
100 parts by mass of chlorine-containing resin; and
0.01 to 5 parts by mass of a foaming-suppressing agent, the foaming-suppressing agent comprising an alkaline-earth metal hydroxide having, on the surface thereof, a first coated layer which contains 0.1 to 20% by mass in terms of SiO₂ of silica in 100% by mass of an uncoated alkaline-earth metal hydroxide.

6. The chlorine-containing resin composition according to claim 5 comprising 0.1 - 3 parts by mass of the foaming-suppressing agent.

## Patentansprüche

1. Verwendung eines Schäumungsunterdrückungsmittels für eine chlorhaltige Harzzusammensetzung, die ein Erdalkalimetallhydroxid, das auf der Oberfläche davon eine erste beschichtete Schicht aufweist, die 0,1 bis 20 Massen-% Silica in Form von SiO₂ in Bezug auf 100 Massen-% unbeschichtetes Erdalkalimetallhydroxid enthält, als ein Schäumungsunterdrückungsmittel in einer chlorhaltigen Harzzusammensetzung umfasst, wobei die chlorhaltige Harzzusammensetzung umfasst:
100 Massenanteile chlorhaltiges Harz und
0,01 bis 5 Massenteile Schäumungsunterdrückungsmittel.

2. Verwendung des Schäumungsunterdrückungsmittels nach Anspruch 1, wobei das Erdalkalimetall Magnesiumhydroxid ist.

3. Verwendung des Schäumungsunterdrückungsmittels nach Anspruch 1 oder 2,
wobei das Erdalkalimetallhydroxid, das eine erste beschichtete Schicht auf der Oberfläche davon aufweist, ferner eine zweite beschichtete Schicht umfasst, die aus wenigstens einem Oberflächenbehandlungsmittel gebildet ist, das aus der aus höherwertigen Fettsäuren, höherwertigen Fettsäurealkalimetallsalzen, mehrwertigem Alkohol, höherwertigen Fettsäureestern, anionischen Detergenzien, Phosphorestern, Silankopplungsmitteln, Aluminiumkopplungsmitteln, Titanatkopplungsmitteln, Organosilanen, Organosiloxanen und Organosilazanen bestehenden Gruppe ausgewählt ist.

4. Verwendung nach Anspruch 1, 2 oder 3, wobei die chlorhaltige Harzzusammensetzung 0,1 bis 3 Massenanteile Schäumungsunterdrückungsmittel umfasst.

5. Schäumungsunterdrückende chlorhaltige Harzzusammensetzung zum Spritzgießen, umfassend
100 Massenanteile chlorhaltiges Harz und
0,01 bis 5 Massenanteile Schäumungsunterdrückungsmittel, wobei das Schäumungsunterdrückungsmittel ein Erdalkalimetallhydroxid umfasst, das auf der Oberfläche davon eine erste beschichtete Schicht aufweist, die 0,1 bis 20 Massen-% Silica in Form von SiO₂ in Bezug auf 100 Massenanteile unbeschichtetes Erdalkalimetallhydroxid enthält.

6. Chlorhaltige Harzzusammensetzung nach Anspruch 5, umfassend 0,1 bis 3 Massenanteile Schäumungsunterdrückungsmittel.

## Revendications

1. Utilisation d'un agent antimousse pour une composition de résine contenant du chlore comprenant un hydroxyde de métal alcalino-terreux ayant, sur la surface de celui-ci, une première couche revêtue qui contient de 0,1 à 20 % en masse en termes de SiO₂ de silice dans 100 % en masse d'un hydroxyde de métal alcalino-terreux non revêtu en tant qu'agent antimousse dans une composition de résine contenant du chlore, dans laquelle la composition de résine contenant du chlore comprend :
100 parties en masse de résine contenant du chlore ; et
de 0,01 à 5 parties en masse de l'agent antimousse.

2. Utilisation de l'agent antimousse selon la revendication 1, dans laquelle le métal alcalino-terreux est l'hydroxyde de magnésium.

3. Utilisation de l'agent antimousse selon la revendication 1 ou 2,
dans laquelle l'hydroxyde de métal alcalino-terreux ayant une première couche revêtue sur la surface de celui-ci comprend en outre une seconde couche revêtue formée à partir d'au moins un agent de traitement de surface choisi dans le groupe constitué des acides gras supérieurs, des sels de métaux alcalins d'acides gras supérieurs, des esters d'acides gras supérieurs d'alcool polyhydrique, des détergents anioniques, des esters phosphoriques, des agents de couplage à base de silane, des agents de couplage à base d'aluminium, des agents de couplage à base de titanate, des organosilanes, des organosiloxanes et des organosilazanes.

4. Utilisation selon la revendication 1, 2 ou 3, dans laquelle la composition de résine contenant du chlore comprend de 0,1 à 3 parties en masse de l'agent antimousse.

5. Composition de résine contenant du chlore antimousse pour moulage par injection, comprenant
100 parties en masse de résine contenant du chlore ; et
de 0,01 à 5 parties en masse d'un agent antimousse, l'agent antimousse comprenant un hydroxyde de métal alcalino-terreux ayant, sur la surface de celui-ci, une première couche revêtue qui contient de 0,1 à 20 % en masse en termes de SiO₂ de silice dans 100 % en masse d'un hydroxyde de métal alcalino-terreux non revêtu.

6. Composition de résine contenant du chlore selon la revendication 5 comprenant de 0,1 à 3 parties en masse de l'agent antimousse.
